(19) Europäisches Patentamt
European Patent Office
Office européen des brevets

(11) Veröffentlichungsnummer : **0 077 502**
**B1**

(12) # EUROPÄISCHE PATENTSCHRIFT

(45) Veröffentlichungstag der Patentschrift : **09.01.85**

(51) Int. Cl.⁴ : **C 01 B 15/08**

(21) Anmeldenummer : **82109312.7**

(22) Anmeldetag : **08.10.82**

(54) **Wasserstoffperoxid-Addukt, Verfahren zu seiner Herstellung und seine Verwendung.**

(30) Priorität : **16.10.81 DE 3141152**

(43) Veröffentlichungstag der Anmeldung : **27.04.83 Patentblatt 83/17**

(45) Bekanntmachung des Hinweises auf die Patenterteilung : **09.01.85 Patentblatt 85/02**

(84) Benannte Vertragsstaaten : **AT BE CH DE FR GB IT LI NL SE**

(56) Entgegenhaltungen : **FR-A- 2 277 885**

(73) Patentinhaber : **Peroxid-Chemie GmbH**
**Dr.-Gustav-Adolph-Strasse 3**
**D-8023 Höllriegelskreuth bei München (DE)**

(72) Erfinder : **Dötsch, Werner, Dr. Dipl.-Chem.**
**Kreuzgasse 3**
**D-5462 Bad Hönningen (DE)**
Erfinder : **Honig, Helmut, Dr.rer.nat. Dipl-Chem.**
**Kranzlstrasse 14**
**D-8191 Gelting (DE)**
Erfinder : **Siegel, Rudolf**
**Kurt-Schumacher-Strasse 8**
**D-5450 Neuwied 13 (DE)**

(74) Vertreter : **Lauer, Dieter, Dr.**
**c/o Kali-Chemie AG Postfach 220 Hans-Böckler-Allee 20**
**D-3000 Hannover 1 (DE)**

**EP 0 077 502 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Addukt aus Wasserstoffperoxid, Natriumsulfat und Kaliumchlorid, ein Verfahren zu dessen Herstellung sowie die Verwendung dieses Adduktes.

Aus der DE-OS-25 30 539 ist ein Addukt der Formel 4 $Na_2SO_4 \cdot 2\,H_2O_2 \cdot NaCl$ bekannt. Dieses Addukt wird hergestellt, indem man Natriumsulfat mit Wasserstoffperoxid einer Konzentration von 70 bis 800 g/l in wässriger Lösung in Gegenwart von Natriumchlorid einer Konzentration von 20 bis 300 g/l bei einer Temperatur zwischen 0 und 50 °C reagieren läßt, wobei bei geringer Natriumchlorid-Konzentration eine höhere Wasserstoffperoxid-Konzentration anzuwenden ist und umgekehrt.

Wie eine kristallographische Untersuchung zeigt (J.C.S. Chem. Comm. *1978,* S. 288-9), weist das Addukt eine Clathrat-Struktur auf : $H_2O_2$ ist in einem aus Sulfat-Sauerstoff-Atomen gebildeten Käfig eingelagert. Die Na-Ionen des Adduktes besitzen keine einheitliche Koordination : während acht der neun Na-Ionen in einer verzerrt-oktaedrischen Anordnung von je fünf Sauerstoffatomen und einem Chlorid-Ion umgeben sind, ist das neunte Na-Ion in tetragonal-prismatischer Anordnung von Sauerstoffatomen umgeben. Insgesamt besitzt das Addukt also eine recht komplexe Struktur. Die gegenseitige Anordnung und Koordination der Ionen von Natrium, Sulfat und Chlor vermag allein jene Hohlräume (Käfige) zu bilden, die genau den Dimensionen des $H_2O_2$-Moleküls angepaßt sind und die die Stabilität des Clathrates begründen.

Es mußte erwartet werden, daß die Substitution einer Ionenart durch eine weitere, vierte, insbesondere einer größeren Ionensorte die komplexe Käfigstruktur nicht entstehen läßt oder aber die Käfigstruktur aufweitet und die Stabilität des Clathrates drastisch herabsetzt. So ist auch der DE-OS 25 30 539 keinerlei Hinweis zu entnehmen, daß eine solche Abänderung möglich sei. Die Erwartung, daß der Einbau einer vierten Ionenart nicht zur Bildung stabiler Addukte führt, wird durch o. a. Literaturstelle aus J.C.S. Chem. Comm. bestätigt : danach sind alle Versuche gescheitert, andere Alkalimetall-Halogenide in den Komplex einzubauen.

Aufgabe der vorliegenden Erfindung ist es, entgegen dem Vorurteil des Standes der Technik ein abgeändertes Addukt zur Verfügung zu stellen sowie ein technisches Verfahren, insbesondere ein kontinuierliches Verfahren zu dessen Herstellung zu schaffen. Die Aufgabe wird gelöst durch Bereitstellung des Adduktes der Formel 4 $Na_2SO_4 \cdot 2\,H_2O_2 \cdot KCl$ sowie durch das durch die Ansprüche charakterisierte Verfahren.

Überraschenderweise gelang es entgegen den Erwartungen und entgegen dem bestehenden Vorurteil doch, im Addukt das Na-Ion des Natriumchlorids durch das einen etwa 40 % größeren Ionenradius aufweisende K-Ion zu ersetzen.

Das erfindungsgemäße Addukt wird hergestellt, indem man es aus einer Suspension kristallisiert, die pro Liter Lösung 100 bis 900 g, vorzugsweise 200 bis 500 g Wasserstoffperoxid und eine die Sättigungskonzentration des Adduktes bei der Kristallisationstemperatur überschreitende Menge an Natriumsulfat und Kaliumchlorid enthält, wobei das Massenverhältnis von Natriumsulfat zu Kaliumchlorid im Bereich von 2 : 1 bis 12 : 1 vorzugsweise 3 : 1 bis 7 : 1 liegt. Bevorzugt führt man die Kristallisation bei einer Temperatur von 0 bis 60 °C aus.

Ein wesentlicher Aspekt der Erfindung liegt darin, ein kontinuierliches Verfahren zur Herstellung des Kaliumchlorid-enthaltenden Adduktes zur Verfügung zu stellen.

Dieses kontinuierliche Verfahren ist dadurch gekennzeichnet, daß man

a) in eine Vorlage, die eine Suspension die pro Liter 100 bis 900 g, vorzugsweise 200 bis 500 g Wasserstoffperoxid und eine die Sättigungskonzentration des Adduktes bei der Kristallisationstemperatur überschreitende Menge an Natriumsulfat und Kaliumchlorid enthält, wobei das Massenverhältnis von Natriumsulfat zu Kaliumchlorid im Bereich von 2 : 1 bis 12 : 1, vorzugsweise 3 : 1 bis 7 : 1 liegt, kontinuierlich eindosiert.

a1) rückgeführte Mutterlauge, die mit Wasserstoffperoxid auf einen Gehalt von 100 bis 900, vorzugsweise 200 bis 500 g/l aufgestärkt wurde

a2) festes Natriumsulfat und festes Kaliumchlorid in einem Massenverhältnis von 2 : 1 bis 12 : 1 und einer Gesamtmenge, die zur Überschreitung der Sättigungskonzentration des Adduktes bei der Kristallisationstemperatur ausreichend ist, wobei

b) in der Vorlage eine Temperatur von 15 bis 60 °C eingestellt ist,

c) man kontinuierlich Suspension aus der Vorlage in ein Kristallisiergefäß überführt, wobei

d) im Kristallisationsgefäß eine Temperatur von 0 bis 60 °C eingestellt ist,

e) man aus dem Kristallisationsgefäß kontinuierlich Suspension abzieht und in Kristallisat und Mutterlauge auftrennt, wobei

f) die mittlere Verweilzeit in Vorlage und Kristallisationsgefäß mindestens 15 Min. beträgt und

g) man die Mutterlauge zu Stufe a) zurückführt und

h) man das abgetrennte Kristallisat der Trockenstufe zuführt.

Die bei der jeweiligen Kristallisationstemperatur geltende Sättigungskonzentration ist anhand eines Vorversuches schnell zu ermitteln. In Beispiel 3 wird die Ermittlung der Sättigungskonzentration für eine definierte Wasserstoffperoxidkonzentration bei verschiedenen Temperaturen angegeben.

Im Gegensatz zu dem Verfahren der DE-OS 25 30 539 zur Herstellung des NaCl-haltigen Adduktes, bei dem offenbar das Verhältnis NaCl : $H_2O_2$ bei der Herstellung kritisch ist, ist bei der erfindungsgemäßen Herstellung des KCl-haltigen Adduktes das analoge Verhältnis von KCl : $H_2O_2$ weniger kritisch.

Viel wesentlicher ist dagegen das Massenverhältnis von $Na_2SO_4$ zu KCl, das in einem Bereich von 2 : 1 bis 12 : 1, vorzugsweise 3 : 1 bis 7 : 1 liegen soll. Aus Bsp. 4 ist deutlich zu erkennen, daß bei Verlassen dieses optimalen Bereiches der Aktivsauerstoffgehalt des resultierenden Produktes drastisch abfällt. Diese Erkenntnis ist überraschend und aus dem Stand der Technik nicht zu erwarten gewesen.

Als Natriumsulfat wird bevorzugt eine wasserfreie Qualität verwendet, obwohl auch hydratisiertes Sulfat eingesetzt werden kann. Für diesen Fall ist zu beachten, daß das $Na_2SO_4$ : KCl-Verhältnis aus den wasserfreien Werten zu bilden ist.

Die für die Umsetzung zu dosierenden Salze $Na_2SO_4$ und KCl werden vorzugsweise in fester Form in die Vorlage eindosiert. Dabei ist es möglich, die Salze im einzusetzenden Verhältnis bereits vorzumischen und gemeinsam zu dosieren. Eine andere Variante besteht darin, die festen Salze einzeln zu dosieren.

Unter kontinuierlicher Überführung von Lösung oder Suspension ist nicht nur die ständige, ununterbrochene Überführung zu verstehen, sondern auch eine Verfahrensvariante, bei der periodisch Anteile z. B. aus der Vorlage derart in das Kristallisiergefäß überführt werden, daß der Füllungsgrad der Vorlage periodisch z. B. zwischen 70 % und 100 % schwankt.

Die Temperaturführung im erfindungsgemäßen Verfahren ist nicht besonders kritisch. Es hat sich aber als vorteilhaft erwiesen, in der Mischungsstufe bei höherer Temperatur zu arbeiten als in der Kristallisationsstufe. Auf diese Weise erreicht man eine homogene Durchmischung des Reaktionsgemisches.

Die mittlere Verweilzeit in Vorlage und Kristallisationsstufe ist durch zwei Parameter begrenzt. Kurze Verweilzeiten ergeben Produkte mit nur geringem Aktivsauerstoffgehalt. Diese Verfahrensweise liefert daher Addukte der Zusammensetzung $4\,Na_2SO_4 \cdot n\,H_2O_2 \cdot KCl$, wobei n Werte kleiner als 2 annimmt. Zur Herstellung von Addukten mit n = 2 bedarf es im allgemeinen der Verweilzeit von mindestens 15 Min., wobei höhere Verweilzeiten den $H_2O_2$-Gehalt des Adduktes nicht mehr beeinflussen. Höhere Verweilzeiten beeinflussen dagegen die mittlere Korngröße des Adduktes, d. h. mit längerer Verweilzeit werden größere Kristalle erhalten. Es ist daher leicht möglich, durch Optimierung der Verweilzeit in der Kristallisationsstufe das Kornspektrum zu variieren.

Die aus der Kristallisationsstufe entnommene Suspension wird in an sich bekannter Weise in Kristallisat und Mutterlauge aufgetrennt. Die Mutterlauge wird aufgetrennt. Die Mutterlauge wird aufgestärkt und zurückgeführt.

In einer besonderen Verfahrensvariante wird die Kristallisation in Gegenwart an sich bekannter, vorzugsweise alkalifreier Aktivsauerstoffstabilisatoren durchgeführt. Diese werden optimal in Mengen von 0,05 bis 2 Gew.-%, berechnet auf 100 %iges $H_2O_2$ zugesetzt und vorteilhafterweise zusammen mit dem $H_2O_2$ dosiert.

Aus der großen Zahl bekannter, alkalifreier Stabilisatoren seien beispielhaft angeführt Säuren anorganischer oder organischer Natur wie Phosphorsäure, Chinolinsäure, Salicylsäure, Dipicolinsäure (DPA), Chelatbildner wie 8-Oxychinolin oder Ethylendiaminotetraessigsäure (EDTA) oder Phosphonsäurederivate wie Aminotri-(Alkyliden-Phosphonsäure), Ethylendiaminotetra-(methylenphosphonsäure), Alkyliden-Diphosphonsäure oder deren Salze wie z. B. Ethan-1-hydroxy-1,1-diphosphonat (EHDP).

Besonders gute Ergebnisse wurden mit Stabilisatoren auf Basis Phosphonsäure erhalten, insbesondere mit EHDP.

Das Kristallisat wird in an sich bekannter Weise getrocknet, z. B. im Wirbelbett bei Guttemperaturen von 40-80 °C. Sollte die Einstellung eines definierten Kornspektrums erwünscht sein, so kann man zusätzlich eine Siebstufe nachschalten. Feinanteile bzw. gemahlene Grobanteile führt man bei dieser Variante in die Kristallisationsstufe zurück.

Das erfindungsgemäß hergestellte Addukt besitzt ausgezeichnete Eigenschaften bezüglich Aktivsauerstoffstabilität (Temperaturstabilität, Trocken- und Naßstabilität), Abriebfestigkeit, Schüttfähigkeit und Auflösungsgeschwindigkeit.

Überraschenderweise zeigt das gemäß einer besonderen Variante des Verfahrens mit geringen Mengen eines Stabilisators versehene Produkt eine erhöhte Temperaturstabilität, d. h. die Zersetzungstemperatur liegt sogar noch oberhalb der des bekannten, NaCl-haltigen Adduktes.

Das erfindungsgemäß hergestellte Addukt findet Verwendung als Aktivsauerstoffträger in Bleich-, Oxidations- oder Sterilisationsmitteln, vorzugsweise in « dry-bleach » Systemen.

Die nachfolgenden Beispiele sollen die Erfindung näher erläutern ohne ihren Umfang zu begrenzen.

## Beispiel 1

In einem Becherglas (2 l-Inhalt) werden unter Rühren zu 1,2 l wässriger $H_2O_2$-Lösung (333 g/l $H_2O_2$), stabilisiert mit 4,8 ml EHDP, 120 g KCl und 780 g $Na_2SO_4$ hinzugegeben.

Bei einer Temperatur von 20 °C wird 30 Min. gerührt und anschließend unter weiterem Rühren auf 4 °C abgekühlt.

Die dabei anfallende Suspension wird durch Abnutschen in Kristallisat und Mutterlauge getrennt ;

das nutschfeuchte Kristallisat in einem Wirbelbettrockner bei einer Unterbettemperatur von 60 °C getrocknet.

Das so erhaltende KCl-Clathrat weist folgende Analyse auf :

| | |
|---|---|
| Aktivsauerstoff | 4,4 % |
| KCl | 10,3 % |
| $Na_2SO_4$ | 80,3 % |
| Schüttgewicht | 0,85 kp/l |
| Abrieb | 4,0 % |
| Stabilverlust | |
| — Naßtest | 0,91 |
| — Trockentest | 0,91 |
| Lösungsgeschwindigkeit | 100 % |
| Zersetzungstemperatur | 210 °C |
| Kornalanyse | |
| > 0,42 mm | 4,9 % |
| 0,42-0,15 mm | 76,8 % |
| 0,15-0,053 mm | 17,17 % |
| < 0,053 mm | 0,6 % |

Beispiel 1a

Es wird wie in Beispiel 1 gearbeitet, ohne daß zur Kristallisation auf 4 °C abgekühlt wird. Das resultierende Addukte weist im wesentlichen gleiche Eigenschaften auf.

Beispiel 2

In einem Becherglas (I) (3 l-Inhalt) werden unter Rühren zu 1 l wässriger $H_2O_2$-Lösung (33 Gew.-%, stabilisiert mit 4,8 ml EHDP) 150 g KCl und 600 g $Na_2SO_4$ hinzugegeben.

Bei einer Temperatur von 20 °C wird 30 Min. gerührt ; 1/3 des Volumens wird in eine zweites Becherglas (II) (2 l-Inhalt) überführt, in dem unter weiterem Rühren auf 4 °C abgekühlt wird. Die Weiterbehandlung der abgekühlten Suspension geschieht in der in Beispiel 1 aufgeführten Weise.

Die hierbei anfallende Mutterlauge, die 214 g/l $H_2O_2$, 279 g/l $Na_2SO_4$ und 97 g/l KCl enthält, wird mit $H_2O_2$-Lösung (ca. 900 g/l $H_2O_2$) auf 333 g/l aufkonzentriert und in die Vorlage zurückgeführt. Dort wird soviel $Na_2SO_4$ und KCl zudosiert, daß die ursprüngliche Konzentration von 150 g/l KCl und 600 g/l $Na_2SO_4$ erreicht wird.

In Becherglas I stellt sich ohne äußere Kühlung eine Arbeitstemperatur von 24 °C ein.

Die Versuchszeit betrugt 9 h ; die stündlich gezogenen Proben weisen folgende Analyse auf :

| Zeit (Std) | 1 | 2 | 3 | 4 | 5 | 6 | 7 | 8 | 9 |
|---|---|---|---|---|---|---|---|---|---|
| Aktivsauerstoff % | 4,36 | 4,32 | 4,32 | 4,36 | 4,36 | 4,36 | 4,40 | 4,40 | 4,42 |
| Schüttgewicht kp/l | 0,80 | 0,77 | 0,80 | 0,85 | 0,83 | 0,88 | 0,84 | 0,87 | 0,87 |
| KCl | | | | | | 10,6 | 10,6 | 10,6 | 10,5 |
| $Na_2SO_4$ | | | | | | 80,0 | 80,0 | 80,0 | 80,1 |
| Stabilverlust I Naßtest | 3,2 | | | | 2,06 | | | 1,09 | 1,4 |

Beispiel 3

Ermittlung der Sättigungskonzentration

In 30 %-iges, temperiertes $H_2O_2$ wird gemäß Beispiel 1 hergestelltes Addukt unter Rühren eingetragen, bis ein Bodenkörper bestehen bleibt. Die überstehende Lösung wird auf ihren Chlorid-Gehalt analysiert. Die Ergebnisse werden in nachfolgender Tabelle wiedergegeben.

(Siehe Tabelle Seite 5 f.)

Tabelle

| °C | KCl g/l | Addukt errechnet aus KCl |
|---|---|---|
| 1 | 38,7 | 368,9 |
| 5 | 39,5 | 376,5 |
| 10 | 40,2 | 383,2 |
| 15 | 40,2 | 383,2 |
| 20 | 39,8 | 379,4 |
| 25 | 40,2 | 383,2 |
| 30 | 40,2 | 383,2 |

Beispiel 4

Die Arbeitsweise ist wie in Beispiel 1a.

1. Variation : 75 g KCl ≙ Verhältnis 1 : 1
75 g $Na_2SO_4$
Das Addukt weist einen Aktivsauerstoff von 2,0 % auf.

2. Variation : 10 g KCl ≙ Verhältnis 14 : 1
140 g $Na_2SO_4$
Das Addukt weist einen Aktivsauerstoff von 2,1 % auf.

Beispiel 5

In folgender Tabelle ist der Aktivsauerstoffgehalt des Produktes bei Variation der Verweilzeit in Vorlage und Kristallisierstufe wiedergegeben (Arbeitsweise wie in Beispiel 1a).

| Verweilzeit (Minuten) | Kristalle % avox |
|---|---|
| 5 | 0,28 |
| 8 | 0,32 |
| 10 | 0,72 |
| 15 | 3,84 |
| 25 | 4,36 |
| 40 | 4,32 |
| 50 | 4,32 |
| 60 | 4,32 |

Beispiel 6

In folgender Tabelle ist die Abhängigkeit des Stabilverlustes gegenüber der im $H_2O_2$ eingebrachten Stabilisatormenge wiedergegeben (Arbeitsweise wie in Beispiel 2).

| Zusatz an EHDP bezogen auf 100 % $H_2O_2$ | Stabilverlust in % (Naßtest) |
|---|---|
| 1,5 % | 1,34 |
| 1,2 % | 1,4 |
| 0,6 % | 3,7 |
| 0,15 % | 4,2 |
| 0,075 % | 4,7 |
| 0,02 % | 33,8 |

Zur Ermittlung der Produktparameter wurden folgende Testanordnungen benutzt.

Abriebfestigkeit :

In einem mit Bleikugeln von 5 mm Durchmesser zur Hälfte gefüllten, mit 145 UpM rotierenden Zylinder wird eine Probemenge Granulat, das zuvor auf einem DIN-30-Sieb abgesiebt worden war, 15 Minuten behandelt. Anschließend wird wieder gesiebt. Der Prozentgehalt an entstandenem Feinkorn unter 0,053 mm ist der Abrieb.

Naß-Test :

1 g Granulat wird in einem Reagenzglas, das speziell gereinigt wurde, in 1,67 ml $H_2O$ gelöst und 20 Min. in einem Thermostaten bei 60 °C gestellt. Anschließend wird die Probe quantitativ mit verdünnter $H_2SO_4$ in einen Erlenmeyerkolben überführt und durch Redox-Titration der Aktivsauerstoff bestimmt. Der Sauerstoffverlust des Granulats in Prozent ist der Stabilverlust.

Trocken-Test :

Hierzu werden 10 g Granulat in eine Glasschale (Innendurchmesser 80 mm, Höhe 20 mm) eingewogen und nach 2 Stunden bei 54 °C (Trockenschrank) der thermische Stabilverlust bestimmt. Der Aktivsauerstoffverlust des Granulats in Relativprozenten ist der Stabilverlust.

Lösungsgeschwindigkeit :

2 g gemäß Beispiel 1 hergestelltes Addukt werden in 1 l Wasser von 15 °C gegeben. Als Lösungsgeschwindigkeit « 100 % » wird bezeichnet, wenn sich das Addukt nach 1 Min. Rühren vollständig aufgelöst hat.

**Ansprüche**

1. Addukt der Formel

$$4\ Na_2SO_4 \cdot 2\ H_2O_2 \cdot KCl$$

2. Verfahren zur Herstellung eines Adduktes der Formel $4\ Na_2SO_4 \cdot 2\ H_2O_2 \cdot KCl$, dadurch gekennzeichnet, daß man das Addukt aus einer Suspension auskristallisiert, die pro Liter Lösung 100 bis 900 g Wasserstoffperoxid und eine die Sättigungskonzentration des Adduktes bei der Kristallisationstemperatur überschreitende Menge an Natriumsulfat und Kaliumchlorid enthält, wobei das Massenverhältnis von Natriumsulfat zu Kaliumchlorid im Bereich von 2 : 1 bis 12 : 1 liegt.

3. Verfahren nach Anspruch 2, dadurch gekennzeichnet, daß man aus einer Suspension auskristallisiert, die 200 bis 500 g Wasserstoffperoxid pro Liter enthält.

4. Verfahren nach einem der Ansprüche 2 oder 3, dadurch gekennzeichnet, daß man die Kristallisation bei 0 bis 60 °C durchführt.

5. Kontinuierliches Verfahren zur Herstellung eines Adduktes der Formel $4\ Na_2SO_4 \cdot 2\ H_2O_2 \cdot KCl$, dadurch gekennzeichnet, daß man

a) in eine Vorlage, die eine Suspension gemäß einem der Ansprüche 2 oder 3 enthält, kontinuierlich eindosiert

a1) rückgeführte Mutterlauge, die mit Wasserstoffperoxid auf einen Gehalt von 100 bis 900, vorzugsweise 200 bis 500 g/l aufgestärkt wurde

a2) festes Natriumsulfat und festes Kaliumchlorit in einem Massenverhältnis von 2 : 1 bis 12 : 1 und einer Gesamtmenge, die zur Überschreitung der Sättigungskonzentration des Adduktes bei der Kristallisationstemperatur ausreichend ist, wobei

b) in der Vorlage eine Temperatur von 15 bis 60 °C eingestellt ist,

c) man kontinuierlich Suspension aus der Vorlage in ein Kristallisiergefäß überführt, wobei

d) im Kristallisationsgefäß eine Temperatur von 0 bis 60 °C eingestellt ist,

e) man aus dem Kristallisationsgefäß kontinuierlich Suspension abzieht und in Kristallisat und Mutterlauge auftrennt, wobei

f) die mittlere Verweilzeit in Vorlage und Kristallisationsgefäß insgesamt mindestens 15 Min. beträgt und

g) man die Mutterlauge zu Stufe a) zurückführt und

h) man das abgetrennte Kristallisat der Trockenstufe zuführt.

6. Verfahren nach einem der Ansprüche 2 bis 6, dadurch gekennzeichnet, daß man die Kristallisation in Gegenwart von 0,05 bis 2 Gew.-%, bezogen auf undertprozentiges $H_2O_2$, eines Aktivsauerstoffstabilisators, vorzugsweise eines alkalifreien Stabilisators durchführt.

7. Verwendung des Adduktes der Formel 4 $Na_2SO_4 \cdot 2\ H_2O_2 \cdot KCl$ als Aktivsauerstoffträger in Bleich-, Sterilisations- oder Oxidationsmitteln.

## Claims

1. Adduct of the formula

$$4\ Na_2SO_4 \cdot 2\ H_2O_2 \cdot KCl$$

2. A process for the preparation of an adduct of the formula 4 $Na_2SO_4 \cdot 2\ H_2O_2 \cdot KCl$ characterised in that the adduct is crystallised out of a suspension containing 100 to 900 g of hydrogen peroxide per litre of solution and a quantity of sodium sulphate and potassium chloride which exceeds the saturation concentration of the adduct at the crystallisation temperature, where the weight ratio of sodium sulphate to potassium chloride is in the region of 2 : 1 to 12 : 1.

3. A process according to claim 2, characterised in that crystallisation is effected from a suspension containing 200 to 500 g of hydrogen peroxide per litre.

4. A process according to one of claims 2 or 3, characterised in that crystallisation is carried out at 0 to 60 °C.

5. A continuous process for the preparation of an adduct of the formula 4 $Na_2SO_4 \cdot 2\ H_2O_2 \cdot KCl$, characterised by

a) metering continuously into a reaction vessel containing a suspension according to one of claims 2 or 3

a1) recycled mother liquor, the concentration of which was increased with hydrogen peroxide to 100 to 900, preferably 200 to 500 g/l

a2) solid sodium sulphate and solid potassium chloride in a weight ratio of 2 : 1 to 12 : 1 and in a total quantity which is sufficient to exceed the saturation concentration of the adduct at the crystallisation temperature, where

b) a temperature of 15 to 60 °C is effected in the reaction vessel,

c) transferring the suspension continuously from the reaction vessel into a crystallisation vessel, where

d) a temperature of 0 to 60 °C is effected in the crystallisation vessel,

e) withdrawing the suspension continuously from the crystallisation vessel and separating it into crystalline product and mother liquor, where

f) the average residence time in the reaction vessel and crystallisation vessel is at least 15 mins overall and

g) recycling the mother liquor to stage a) and

h) passing the separated crystalline product to the drying stage.

6. A process according to one of claims 2 to 6, characterised in that crystallisation is carried out in the presence of 0.05 to 2 % by weight, based on 100 % $H_2O_2$, of a peroxygen stabiliser, preferably an alkalifree stabiliser.

7. Use of the adduct of the formula 4 $Na_2SO_4 \cdot 2\ H_2O_2 \cdot KCl$ as a peroxygen carrier in bleaching agents, sterilising agents or oxidising agents.

## Revendications

1. Produit d'addition de formule

$$4\ Na_2SO_4 \cdot 2\ H_2O_2 \cdot KCl$$

2. Procédé de fabrication d'un produit d'addition de formule 4 $Na_2SO_4 \cdot 2\ H_2O_2 \cdot KCl$ caractérisé en ce qu'on sépare le produit d'addition à l'état cristallin à partir d'une suspension qui contient, par litre de solution, 100 à 900 g de peroxyde d'hydrogène et une quantité de sulfate de sodium et de chlorure de potassium qui dépasse la concentration de saturation du produit d'addition à la température de cristallisation, le rapport massique entre le sulfate de sodium et le chlorure de potassium se trouvant dans l'intervalle de 2 : 1 à 12 : 1.

3. Procédé suivant la revendication 2 caractérisé en ce qu'on cristallise le produit d'addition à partir d'une suspension qui contient 200 à 500 g de peroxyde d'hydrogène par litre.

4. Procédé suivant l'une des revendications 2 ou 3 caractérisé en ce qu'on effectue la cristallisation entre 0 et 60 °C.

5. Procédé continu de fabrication d'un produit d'addition de formule 4 $Na_2SO_4 \cdot 2\ H_2O_2 \cdot KCl$ caractérisé en ce que :

a) dans un milieu obtenu au préalable, contenant une suspension telle que décrite à l'une des revendications 2 ou 3, ou introduit en continu :

a1) de l'eau mère recyclée qui a été enrichie en peroxyde d'hydrogène jusqu'à une teneur de 100 à 900 g/l, de préférence de 200 à 500 g/l,

a2) du sulfate de sodium solide et du chlorure de potassium solide en un rapport massique de 2 : 1 à 12 : 1 et en une quantité globale qui est suffisante pour dépasser la concentration de saturation du produit d'addition à la température de cristallisation,

b) on règle dans ce milieu préalable une température de 15 à 60 °C,

c) on transfère en continu une partie de la suspension du milieu préalable dans un cristallisoir,

d) on règle dans le cristallisoir une température de 0 à 60 °C,

e) on retire en continu une partie de la suspension du cristallisoir et on la sépare en produit de cristallisation et en eau mère,

f) le temps de séjour moyen dans le milieu préalable et dans le cristallisoir étant d'au moins 15 min,

g) on recycle l'eau mère à l'étape a) et

h) on envoie le produit de cristallisation séparé à l'étape de séchage.

6. Procédé suivant l'une des revendications 2 à 6 caractérisé en ce qu'on effectue la cristallisation en présence de 0,05 à 2 % en poids, sur la base de $H_2O_2$ à cent pour cent, d'un stabilisant d'oxygène actif, de préférence d'un stabilisant exempt d'alcali.

7. Utilisation du produit d'addition de formule 4 $Na_2SO_4 \cdot 2\ H_2O_2 \cdot KCl$ comme porteur d'oxygène actif dans des agents de blanchiment, des agents d'oxydation ou des agents de stérilisation.